# EUROPEAN PATENT APPLICATION

(11) **EP 4 675 330 A1**
(43) Date of publication of application: **07.01.2026**
(21) Application number: 24186814.0
(22) Date of filing: 05.07.2024
(51) Int. Cl.: G02B 21/24, G02B 21/26, G02B 21/06

(54) **MICROSCOPE BASE FOR MOUNTING MICROSCOPE COLUMNS**

(71) Applicant: Leica Instruments (Singapore) Pte. Ltd., Singapore 618299 (SG)
(72) Inventor: Zagel, Christian, 618299 Singapore (SG); Marte, Christian, 618299 Singapore (SG); Klopfer, Andreas, 618299 Singapore (SG)
(74) Representative: Schaumburg und Partner Patentanwälte mbB

(57) **Abstract**

A microscope base (100) configured to mount microscope columns, the microscope base (100) comprising a first group (102) of mounting elements, positioned at a first end (108) of the microscope base (100), and a second group (104) of mounting elements (106) positioned adjacent to the first group (102) of mounting elements (106) between the first group (102) of mounting elements (106) and a second end (110) of the microscope base (100) opposite of the first end (108) of the microscope base 100, wherein the first group (102) of mounting elements (106) is configured to mount a first type of a microscope column, and the second group (104) of mounting elements (106) is configured to mount a second type of a microscope column.

## Description

### Technical fields

The invention relates to a microscope base for mounting microscope columns. The invention further relates to a microscope system comprising said base.

### Background

Microscope bases provide the support on which a microscope can be set up. A microscope may further comprise a microscope column, and an optical unit mounted to the microscope column. Such a microscope is sometimes also called an industrial microscope. Particularly in an industrial environment it is important to enable safe and user-friendly handling of the microscope. Therefore, it is desirable to provide a microscope base that promotes safe and user-friendly handling of the microscope as well as enabling the observation of a variety of samples.

### Summary

It is an object to provide a microscope base and a microscope system that enable the examination of samples with a wide range of sample sizes.

The aforementioned object is achieved by the subject-matter of the independent claims. Advantageous embodiments are defined in the dependent claims and the following description.

The proposed microscope base is configured to mount microscope columns and comprises a first group of mounting elements, which is positioned at a first end of the microscope base. The microscope base also comprises a second group of mounting elements, which is positioned adjacent to the first group of mounting elements and between the first group of mounting elements and a second end of the microscope base, which is opposite of the first end of the microscope base. The first group of mounting elements is configured to mount a first type of a microscope column, and the second group of mounting elements is configured to mount a second type of a microscope column. The first group of mounting elements may also be configured to mount a second type of a microscope column, and the second group of mounting elements may also be configured to mount a first type of a microscope column. The first group of mounting elements consists of at least one mounting element and the second group of mounting elements consists of at least one mounting element.

The microscope base may be part of a microscope. The microscope may further comprise at least one of a microscope column, an illumination device, and an optical unit. It may further comprise a microscope stage and/or a microscope column adapter configured to mount the column to the microscope base.

The first and second groups of mounting elements define at least two mounting positions for a microscope column. The microscope column may be mounted in any of the at least two positions. This makes it possible to mount the column at different distances from a sample space, for example, such that samples with a wide range of sample sizes with varying base areas and volumes can be examined. The sample space is a space formed by the assembled microscope where the sample is placed for examination. Providing the two groups of mounting elements further enables mounting of different microscope columns. For example, each of the two groups may comprise a different pattern of mounting elements, allowing different microscope columns to be mounted to the microscope base without the use of an adapter.

In an embodiment, the microscope base further comprises an opening configured to receive a transmitted light illumination device. The opening allows embedding of a transmitted light illumination device into the microscope base, thus reducing the height of protruding parts, making it possible to design the microscope base to be particularly flat. Having a flat microscope base makes it possible to arrange samples, that would otherwise be too large, in the sample space. In another embodiment the depth of the opening and the height of the embedded transmitted light illumination device are such, that it is possible to embed the transmitted light illumination device without any protruding parts. Embedding of the transmitted light illumination device in the microscope base without any protruding parts creates a flat surface atop the microscope base which enables the use of the microscope base as microscope stage for samples, for example. Such samples may be arranged and moved on the microscope base, while being illuminated from below by the transmitted light illumination device. In another embodiment the microscope base may further be configured to receive a transparent lid, for example a clear glass lid, on top of the opening configured to receive a transmitted light illumination device. The lid covers the opening, and thus provides a flat surface on the microscope base, suitable for use as a microscope stage. In one embodiment the height of the lid is such, that the lid may close off seamlessly with the microscope base.

In a further embodiment, the microscope base also comprises a receiving portion configured to receive a microscope stage. The receiving portion allows for mounting of a microscope stage. A microscope stage may be chosen according to the specific requirement of an examination, for example a microscope stage with cross table functionality may be chosen allowing for fine adjustments in the X, Y, and Z axes for moving sensitive samples. Microscope stages may also be chosen according to sample size.

In an embodiment, the microscope base comprises a transmitted light illumination device. The transmitted light illumination device may have a height in the range of at least 1 mm to at most 20 mm. The transmitted light illumination device may also have a height of at least 5 mm to at most 15 mm. The height describes the height in a setup in accordance with the intended use of the transmitted light illumination device. A low height of the transmitted light illumination device makes it possible to design the microscope base to be particularly flat. Providing a transmitted light illumination device in the microscope base itself reduces the protruding height of the transmitted light illumination device, compared to non-integrated transmitted light illumination devices. In one embodiment, the transmitted light illumination device is embedded without any protruding parts.

In another embodiment, the microscope base comprises a transmitted light illumination device that is configured to provide a diffuse illumination. This enables microscopy with less reflection, and reduced glare.

In an embodiment, the transmitted light illumination device may comprise a plate-shaped light guide having a lower boundary surface, an upper boundary surface, and at least one lateral surface. The transmitted light illumination device may further comprise at least one light-emitting means arranged to radiate light into the light guide from at least two different directions, via at least one lateral surface of the light guide serving as a light entrance surface. In such a transmitted light illumination device the light propagates in the light guide as a result of total reflection. The transmitted light illumination device may further comprise an element abutting against a contact surface at the lower boundary surface of the light guide. In such a transmitted light illumination device the abutting element disrupts the total reflection such that an outcoupling of light occurs through the upper boundary surface of the light guide. In such a transmitted light illumination device a planar area of the contact surface is less than a planar area of the lower boundary surface. The element that disrupts total reflection produces a diffuse scattering, at the contact surface of the light propagating in the light guide, thereby creating diffuse illumination. In an embodiment the element that disrupts total reflection of the transmitted light illumination device may be opaque.

An exemplary transmitted light illumination device that may be used with the microscope base and which may be configured to provide a diffuse illumination is disclosed in DE 10 2011 003 568 B4.

In a further embodiment, the microscope base comprises a controller configured to control the transmitted light illumination device. The controller may be located at the first end of the microscope base. In an embodiment the microscope base comprises at least one control element, for example one or more buttons, a slider, or a rotary switch. The control element is configured to send control signals to the controller to control the intensity of the transmitted light illumination device. The controller enables a user to adjust the light intensity in accordance with the analyzed sample.

In another embodiment the microscope base has a height in the range of 10 mm to 40 mm, in particular in the range of 20 mm to 30 mm. The height describes the height in a setup in accordance with the intended use of the microscope base. Mounting of a microscope column to a microscope base usually requires a microscope column adapter. Otherwise, the height of the microscope base is too thick to mount the microscope column to the microscope base by applying fastening elements, such as screws, from the underside of the microscope base. However, including a microscope column adapter in the microscope set up, increases the complexity of setting up the microscope. Introducing the microscope column adapter as additional part between the microscope base and the microscope column also creates an undesirable additional degree of freedom. This undesirable degree of freedom may can cause the microscope column to have more slack and lead to broader error margins during an examination. The microscope base with a height in the aforementioned range has a height, which allows mounting of the microscope column to the microscope base by applying fastening elements, such as nails, screws, pegs, bolts, rivets and/or pins, from the underside of the microscope base. This decreases the complexity of the setup and leads to a lower error margin during measurements. Furthermore, the microscope base with a height in the aforementioned range is easier to grip, than a microscope base with a height higher than the aforementioned range. Therefore, the microscope base with a height in the aforementioned range improves the handling for the user of the microscope base and a microscope assembled using the microscope base.

In an embodiment a main body of the microscope base is manufactured by die casting, for example aluminum die casting. This allows fast manufacturing with a low margin of error. Aluminum die casting further enables manufacturing of a particularly light microscope base compared to a microscope base manufactured from other materials such as iron, which improves handling. In another embodiment the main body of the microscope base is manufactured in one piece by milling or 3d-printing. Alternatively, the main body of the microscope base is assembled from multiple parts. The microscope base or parts may be manufactured from a metal, such as aluminum or iron, a plastic or similarly suited materials.

In another embodiment the microscope base comprises a set of carrying handles positioned on a left side and a right side of the microscope base. For example, the carrying handles are positioned close to the mounting elements on the left side and the right side of the first end of the microscope base. Carrying handles positioned on the left side and the right side of the first end of the microscope base are positioned close to the mounting elements, and thus close to the center of gravity of a microscope assembled from the microscope base and a microscope column. This arrangement reduces lever action, and thus enables a safe transport of the assembled microscope. The set of carrying handles may also be positioned on the first end and on the second end of the microscope base. In another embodiment carrying handles may be positioned on all sides of the microscope base. The positioning of carrying handles on the microscope base generally improves the handling of the microscope base for the user, as the set of handles allows better gripping of the microscope base. In an embodiment the handles comprise at least one of indentations, protrusions, grips, textured surfaces and soft overlays with anti-slippery materials such as rubber or silicone.

In a further embodiment a distance between a center of the first group of mounting elements and a center of the second group of mounting elements is at least 70 mm and at most 100 mm, for example at least 80 mm and at most 90 mm. The center of the first group of mounting elements and the center of the second group of mounting elements may correspond to a center of gravity of the first group of mounting elements and a center of gravity of the second group of mounting elements, respectively. The center of the first group of mounting elements and the center of the second group of mounting elements may also be determined by assuming a polygon shape from the outermost mounting elements and calculating the center of gravity for the respective polygon shape. The above-mentioned distances between the center of the first group of mounting elements and the center of the second group of mounting elements enable mounting of an increased variety of types of columns, as columns can be mounted to mounting elements of the first and the second group of mounting elements. The above-mentioned distances also enable the user to mount a column at various distances from the sample space, for example. Respectively, the above-mentioned distances also enable the user to choose a suitable optical unit, according to the space on the microscope base required to examine the sample.

In another embodiment, at least one of the first group of mounting elements and the second group of mounting elements comprises through holes and/or blind holes, preferably threaded holes. In an embodiment the first group of mounting elements and the second group of mounting elements comprise any combination of through holes and/or threaded through holes and/or blind holes and threaded blind holes and/or other mounting elements. This enables mounting by affixing the microscope base and the column using fastening elements, for example nails, screws, pegs, bolts, rivets and/or pins. Threaded through holes enable a particularly stable mounting of the column to the base using screws.

In a further embodiment the mounting elements of at least one of the first group of mounting elements and the second group of mounting elements are arranged in any one of the following configurations: centric, linear, triangular, rectangular, trapezoidal, pentagonal, hexagonal, heptagonal, octagonal, circular and in an X-shaped manner. This increases the variety of types of microscope columns that can be mounted onto the microscope base and ensures good distribution of a load that is applied to the microscope base.

In an embodiment the first group of mounting elements and the second group of mounting elements each consist of at least three mounting elements. In another embodiment the first group of mounting elements and the second group of mounting elements each consist of at least three mounting elements and at most 10 mounting elements. Tripod configurations with three points of support are known to be more stable than configurations with only two or one points of support. A tripod configuration or a configuration with more points of support thus enables stable mounting of a microscope column with an improved load distribution. Such a configuration enables better load distribution and more stable mounting compared to a configuration where the first group of mounting elements and the second group of mounting elements each consist of at most two mounting elements.

The invention further relates to a microscope system comprising the microscope base as described above, at least one microscope column, configured to be mounted to at least one of the first group of mounting elements and the second group of mounting elements, and at least one optical unit, configured to be mounted to the microscope column. This microscope system enables a microscope to be setup in different configurations according to sample requirements. These configurations can include setups that allow room for samples that might otherwise be too large for examination. In such a configuration the microscope column may be positioned on the first group of mounting elements close to the first end, making it possible to use an optical unit having a long arm. This kind of setup creates room between the column and the sample space in order to accommodate the sample. In another setup a sample may require examination using an optical unit that is particularly heavy, for example an optical unit comprising a large number of heavy optical components such as a large number of lenses. In such a setup the microscope column may be positioned on the second group of mounting elements closer to a center of the microscope base. Here, an optical unit with a shorter arm may be used. This kind of setup helps to balance the center of gravity of the microscope system, thus reducing the risk of the microscope being knocked over accidentally. The microscope system in general enables a particularly stable set up with improved handling of the microscope to enable the analysis of samples with a wide range of sample sizes.

The microscope system has the advantages of the microscope base described herein and may be built further with the elements of the microscope base described herein. The microscope base has the advantages of the microscope system described herein and may be built further with the elements of the microscope system described herein.

The microscope may be assembled by installing the optical unit onto the microscope column. The microscope column with the optical unit may then be mounted onto the microscope base with at least one of the mounting elements of the first group of mounting elements and the second group of mounting elements. Alternatively, the microscope column may be mounted to the microscope base before the optical unit is mounted to the microscope column. The mounting position, the type of column and the optical unit can be selected to provide enough room to fit the area of interest of the sample into the focus point of the optical axis. A microscope column adapter may be used to mount the microscope column to the microscope base. Optionally, an illumination device may be set up, for example the transmitted light illumination device or a device for reflected light illumination. Further, a microscope stage may be set up, if the microscope base alone does not satisfy requirements to keep the area of interest of the sample in the focus point of the optical axis.

In one embodiment the at least one microscope column comprises matching elements that are fixed to the microscope column or are integrated parts of the microscope column. Such matching elements of the microscope column are configured to engage with the respective mounting elements of the microscope base. The matching elements enable a stable set up of the microscope system, where no microscope column adapter is required to connect the microscope column to the microscope base. A setup of the microscope system where no microscope column adapter is required decreases the complexity of setting up the microscope and leads to a lower error margin during examination.

All embodiments of the microscope base and the microscope system are non-exclusive and shall be understood to also disclose embodiments, wherein features of any number of embodiments are combined together.

### Short Description of the Figures

Hereinafter, specific embodiments are described referring to the drawings, wherein:
- Figure 1: is a schematic view of a microscope base according to an embodiment;
- Figure 2: is a schematic view of an underside of a microscope base according to an embodiment;
- Figure 3: is a schematic view of a column of the microscope system according to an embodiment;
- Figure 4: is a schematic view of a microscope system according to an embodiment;
- Figure 5: is a schematic view of a microscope system according to a further embodiment;
- Figure 6: is a schematic view of a column of the microscope system according to another embodiment; and
- Figure 7: is a schematic view of a microscope system according to another embodiment.

### Detailed Description

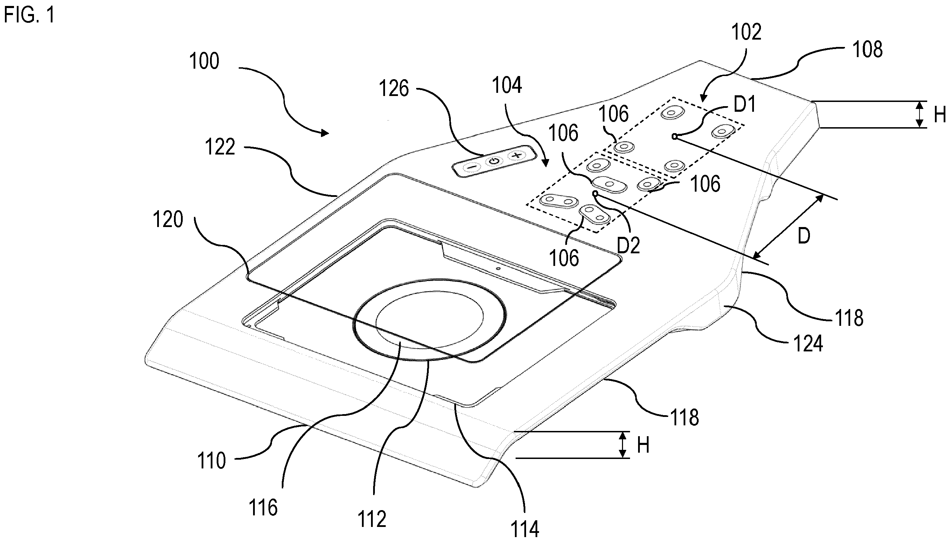

Figure 1 is a schematic view of a microscope base 100 according to an embodiment.

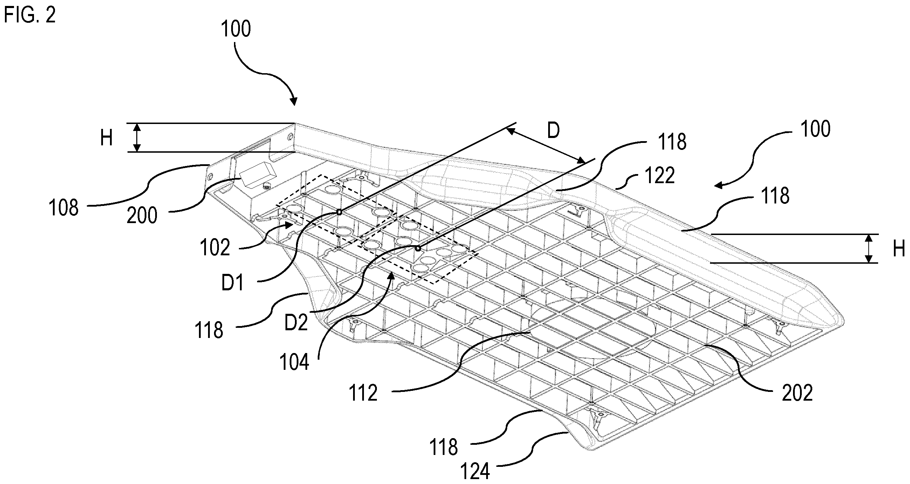

The microscope base 100 comprises a first group 102 of mounting elements 106 positioned at a first end 108 of the microscope base 100. The microscope base 100 further comprises a second group 104 of mounting elements 106 positioned adjacent to the first group 102 of mounting elements. The second group 104 of mounting elements 106 is positioned between the first group 102 of mounting elements 106 and a second end 110 of the microscope base 100, which is arranged opposite of the first end 108 of the microscope base 100. As an example, the first group 102 of mounting elements 106 consists of four mounting elements 106, which are arranged in a rectangular configuration. As an example, the second group 104 of mounting elements 106 consists of seven mounting elements 106, which are arranged in an X-shaped configuration. The mounting elements 106 of the first and second groups 102, 104 each comprise threaded through holes. The opposite side of the threaded through holes is shown in Figure 2. A center D1 of the first group 102 of mounting elements 106 and a center D2 of the second group 104 of mounting elements 106 are positioned at a distance D from each other. In Figure 1 the distance is 85 mm. The centers D1, D2 of the first and second groups 102, 104 are determined by assuming a polygon shape from the outermost mounting elements 106 of the respective first group 102 and second group 104 of mounting elements 106 and by calculating the center of gravity for the polygon shape. Alternatively, the centers D1, D2 of the first and second groups 102, 104 may be determined as the centers of gravity of all mounting elements 106.

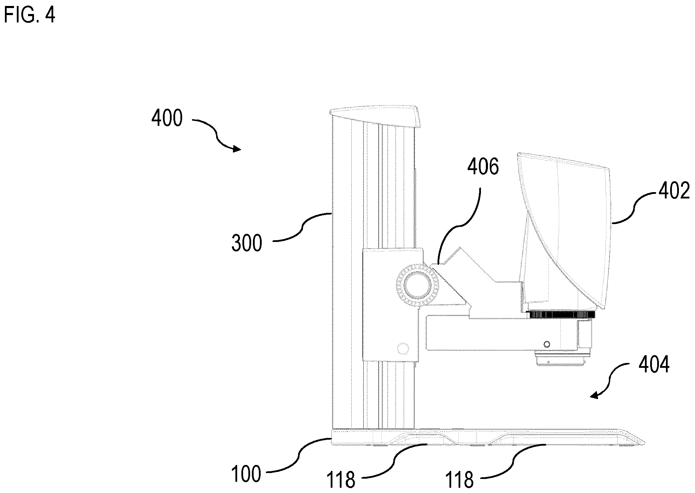

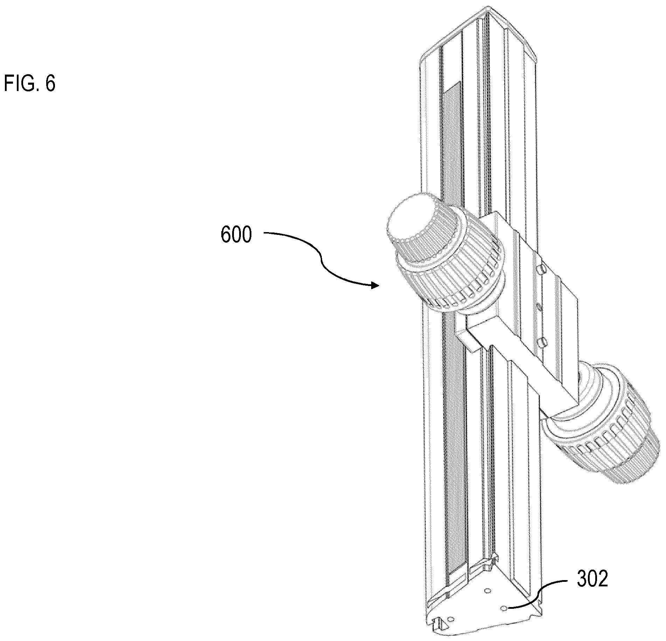

The positioning of the center D1 of the first group 102 of mounting elements 106 and the center D2 of the second group 104 of mounting elements 106 at distance D from each other enables mounting of an increased variety of types of microscope columns 300, 600. Mounting of an increased variety of types of microscope columns 300, 600 is enabled as microscope columns 300, 600 (see Figures 4, and 6) can be mounted to mounting elements 106 of the first 102 and the second group 104 of mounting elements 106. The positioning also enables mounting of a microscope column 300, 600 at various distances from an illumination device 116 and mounting of a suitable optical unit 402, 502, 702 (see Figures 4, 5, and 7), according to the space required to examine a sample on the microscope base 100. Examples of microscopes 400, 500, 700 assembled from the microscope columns 300, 600 mounted to the microscope base 100 are shown in Figures 4, 5 and 7.

The microscope base 100 further comprises an opening 112 configured to receive a transmitted light illumination device 116. Embedding of the transmitted light illumination device 116 into the microscope base 100 reduces the height of protruding parts, making it possible to design the microscope base 100 to be particularly flat. Having a flat microscope base 100 makes it possible to arrange samples in the sample space 404 that would otherwise be too large. In this embodiment, the depth of the opening 112 and the height of the embedded transmitted light illumination device 116 are such, that the transmitted light illumination device 116 is embedded without any protruding parts. Embedding the transmitted light illumination device 116 into the microscope base 100 without any protruding parts also creates a flat surface atop the microscope base 100 which makes it possible to use a top surface of the microscope base 100 as a microscope stage for samples.

The microscope base 100 further comprises a transparent lid 120, for example a clear glass lid 120, on top of the opening 112 configured to receive a transmitted light illumination device 116. The lid 120 may cover the opening 112, and thereby provides a flat surface atop the microscope base 100, suitable for use as a microscope stage. In this embodiment the height of the lid 120 is such, that the lid 120 may close off seamlessly with the microscope base 100, thus enlarging the area of the flat surface atop the microscope base 100 suitable for use as a microscope stage.

The microscope base 100 further comprises a receiving portion 114 configured to receive a microscope stage. The receiving portion 114 allows for mounting of a microscope stage, by providing an exact fit for mounting the microscope stage into the receiving portion 114. In this embodiment, the receiving portion 114 is rectangular, corresponding to the rectangular shape of the microscope stage. The receiving portion 114 may also take on other shapes suitable for mounting of a microscope stage. A microscope stage may be chosen according to the requirements of a particular experiment, for example a microscope stage with cross table functionality may be chosen allowing for fine adjustments in the X, Y, and Z axes. Microscope stages may also be chosen according to sample size.

The microscope base 100 also comprises carrying handles 118 positioned on a left side 122 and a right side 124 of the microscope base 100. The carrying handles 118 are positioned close to the mounting elements 106 on the left side 122 and the right side 124 of the first end 108 of the microscope base 100. Figure 1 only shows the handles 118 on the right side 124 of the first end 108. The handles 118 on the left side 122 of the first end 108 are shown in Figure 2. By being positioned at the first end 108 of the microscope base 100, the carrying handles 118 are close to the mounting elements 106, and thus close to the center of gravity of a microscope 400, 500, 700 assembled from the microscope base 100 and a microscope column 300, 600. This arrangement reduces lever action, and thus enables a safe transport of the assembled microscope 400, 500, 700. In this embodiment a set of carrying handles 118 is also positioned on the left side 122 and the right side 124 of the second end 110 of the microscope base 100, providing additional gripping area for safe handling and transport of the microscope base 100. Carrying handles 118 may also be positioned at the first end 108 and on the second end 110 of the microscope base 100, or on all sides 108, 110, 122, 124 of the microscope base 100. The positioning of carrying handles 118 on the microscope base 100 generally improves the handling of the microscope base 100 for the user, as the set of handles 118 allows better gripping of the microscope base 100 with an improved weight distribution of the microscope base 100. The handles 118 shown in this embodiment comprise additional indentations and may also comprise textured surfaces and/or soft overlays with anti-slippery materials such as rubber or silicone.

The microscope base 100 has a height H, which describes the height H in a setup in accordance with the intended use of the microscope base 100. The height H may be measured as the height difference between a bottom surface of the microscope base 100 closest to the ground and a top surface of the microscope base 100 farthest from the ground when the microscope base is setup in accordance with the intended use. In this embodiment the height H is low enough, to allow mounting of the microscope column 300, 600 to the microscope base 100 by applying fastening elements, such as nails, screws, pegs, bolts, rivets and/or pins, from the underside of the microscope base 100 shown in Figure 2. This decreases the complexity of the setup and leads to a lower error margin during measurements. Furthermore, a low height H improves the handling for the user of the microscope base 100 and of the microscope with the base 100, as the microscope base 100 is easier to grip, than a microscope base 100 with a higher height. The height H of the microscope base 100 is also dependent on a height of the transmitted light illumination device 116. In this embodiment, the low height H of the microscope base 100 is achieved by embedding a transmitted light illumination device 116 into the microscope base 100 and by using a transmitted light illumination device 116 with a height lower than the microscope base 100.

In Figure 1, the microscope base 100 has two controller buttons 126, which are configured to send control signals to a controller 200 (see Figure 2) to control the intensity of the light emitted by the transmitted light illumination device 116. The controller 200 is arranged on the underside of the microscope base shown in Figure 2.

Figure 2 is a schematic view of the underside of the microscope base 100 shown in Figure 1.

As can be seen from Figure 2, the underside of the microscope base 100 comprises the controller 200 arranged at the first end 108 of the microscope base 100. The controller 200 is configured to control the transmitted light illumination device 116, in particular the intensity of the light emitted by the transmitted light illumination device 116. In this embodiment, the controller 200 is configured to be controlled by the two controller buttons 126, arranged on the top surface of the microscope base shown in Figure 1. In another embodiment, a slider or a rotary switch, may be provided instead or in addition. The controller 200 may also be configured to receive control signals from an external source and to be controlled by the control signals.

The underside of the microscope base 100 further comprises a ribbing structure 202. The ribbing structure 202 enhances the load-bearing ability of the microscope base 100 and decreases the risk of load-bearing related deformation of the microscope base 100.

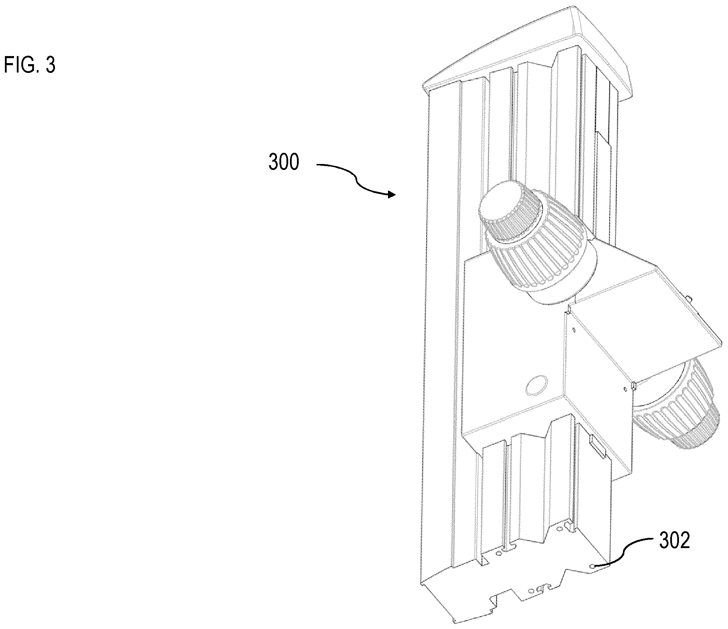

Figure 3 is a schematic view of the underside of a microscope column 300.

The microscope column 300 comprises four matching elements 302, which are positioned on a lower end of the microscope column 300. The matching elements 302 of the microscope column 300 are configured to engage with the respective mounting elements 106 of the microscope base 100 shown in Figure 1. In this embodiment, the microscope column 300 comprises matching elements 302 that are integrated into the column 300. In other embodiments, the microscope column may also comprise matching elements, which are fixed to the column. The matching elements 302 are arranged in a rectangular configuration that is an exact fit to the respective mounting elements 106 of the first group 102 of mounting elements 106 and of the second group 104 of mounting elements. Thus, the matching elements 302 enable a stable mounting of the column 300 to the microscope base 100. In other embodiments, a configuration of matching elements 302 that is an exact fit to mounting elements 106 of the microscope base 100, may be a different to the above-mentioned configuration, depending on the arrangement of mounting elements 106 on the microscope base 100. In this embodiment the matching elements 302 of the microscope column 300 comprise threaded through holes, whereas in other embodiments they might also be protruding elements, and/or elements enabling a click mechanism. The microscope column 300 is configured to be mounted to the microscope base 100 by fastening the matching elements 302 of the column 300 to the respective mounting elements 106 of the microscope base 100 by applying fastening elements from the underside of the microscope base 100. The affixing of the column 300 to the base 100 from the underside of the microscope base 100 is possible because of the low height H of the microscope base 100. In another embodiment, the microscope column 300 may also be mounted to the microscope base 100 by engaging the matching elements 302 of the microscope column 300 with the mounting elements 106 of the microscope base 100 without applying additional fastening elements.

Figure 4 shows a schematic view of a microscope system 400 according to an embodiment.

The microscope system 400 comprises the microscope base 100 shown in Figure 1, the microscope column 300 shown in Figure 3 and an optical unit 402. The optical unit 402 is mounted on the microscope column 300. The microscope column 300 is mounted to the microscope base 100 by engaging the matching elements 302 of the microscope column 300 with the respective mounting elements 106 of the first group 102 of mounting elements 106 of the microscope base 100.

The setup of the microscope system 400 shown in Figure 4 is suitable to provide a large space for examining a sample. The extent of space required to fit the sample is achieved by using an optical unit 402 with a long arm 406, mounted to the microscope column 300 above a sample space 404, wherein the sample may be arranged. Thus, the embodiment shown in Figure 4 demonstrates how the microscope base 100 and the microscope system 400 enable the analysis of samples with a wide range of sample sizes.

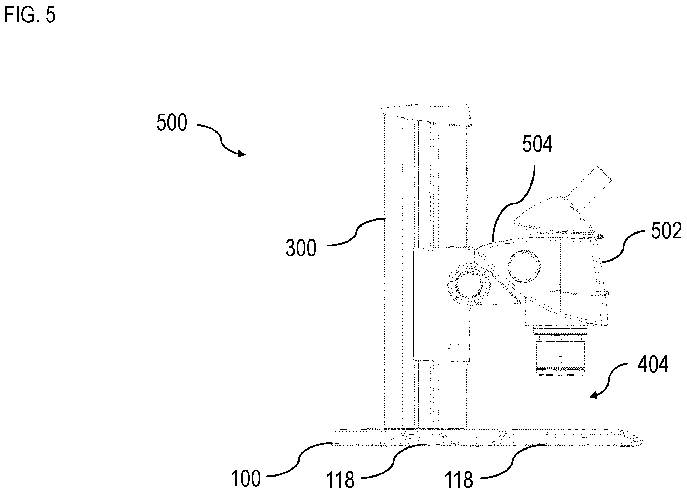

Figure 5 shows a schematic view of a microscope system 500 according to an embodiment.

The setup of the microscope system 500 shown in Figure 5, differs from the setup shown in Figure 4, in that the optical unit 502 mounted to the microscope column 300 has a short arm 504. Further, the microscope column 300 is mounted to mounting elements 106 of the first group 102 and the second group 104 of mounting elements 106 of the microscope base 100.

The setup of the microscope system 500 shown in Figure 5 is suitable for accommodating optical units 502 with an arm 504 that has a different length compared to the arm 406 of the optical unit 402 shown in Figure 4. Different types of examination such as transmitted light or reflected light microscopy, digital processing via integrated equipment or certain degrees of magnification not supported by one type of optical unit, may require the use of different optical units. The different optical units may have a different arm length, to reduce lever action for a heavy optical unit, for example. The mounting of the microscope column 300 on mounting elements 106 of the first group 102 and the second group 104 of mounting elements 106 positions the optical unit 502 above the sample space 404. Thus, the embodiment shown in

Figure 5 shows the versatility of the microscope base 100 and the microscope system 400, 500, 700 for accommodating different optical units 402, 502, 702 for different types of examinations. Further, as the same column 300 could be used for the setup of Figure 3 and Figure 4, this demonstrates how versatility is achieved at low complexity, as only one part of the microscope system 500 had to be exchanged. With lower complexity less time is required to set up the microscope system 400, 500, 700.

Figure 6 is a schematic view of the underside of a microscope column 600.

The microscope column 600 shown in Figure 6 differs from the microscope column 300 shown in Figure 3, in that the microscope column 600 in Figure 6 has three matching elements 302 in a triangular configuration and in that the microscope column 600 is shorter than the microscope column 300. Such a shorter microscope column 600 has the advantage of reduced lever-action in a microscope system.

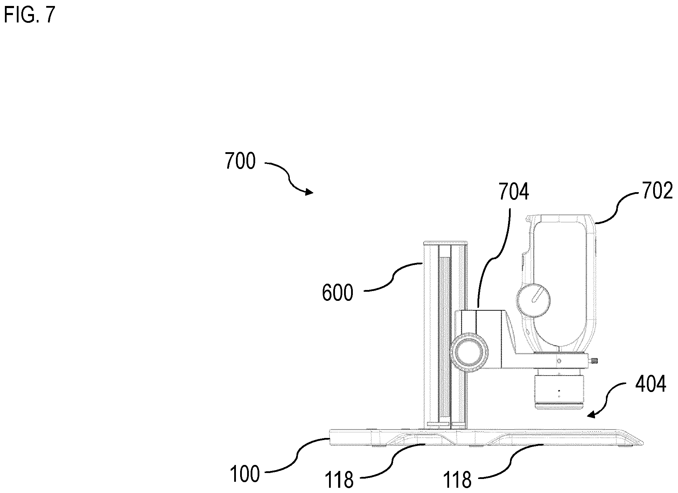

Figure 7 shows a schematic view of the microscope column 600 of the microscope system 700 depicted in Figure 6.

The setup of the microscope system 700 shown in Figure 7, differs from the setups shown in Figure 4 and 5, in that the optical unit 702 mounted to the microscope column 600 has a shorter arm. Further, the microscope column 600 is mounted to mounting elements 106 of the second group 104 of mounting elements 106 of the microscope base 100.

The setup of the microscope system 700 shown in Figure 7 is suitable for accommodating heavy optical units 702 with a shorter arm 704 compared to the arms 406, 504 of the optical units 402, 502 shown in Figure 4 and 5. The short arm 704 of the optical unit 702 and the column 600, which is shorter than the column 300 shown in Figures 3 and 4, reduces the risk of lever-action. The mounting of the microscope column 600 on mounting elements 106 of the second group 104 of mounting elements 106 positions the optical unit 702, close to a center of the microscope base 100 and balances the center of gravity of the microscope system 700. This arrangement of the center of gravity of the microscope system 700 further reduces the risk of lever-action, which improves handling and occupational safety.

### Reference signs

- 100: Microscope base
- 102, 104: Group of mounting elements
- 106: Mounting element
- 108, 110: End
- 112: Opening
- 114: Receiving portion
- 116: Transmitted light illumination device
- 118: Carrying handle
- 120: Lid
- 122, 124: Side
- 126: Button
- 200: Controller
- 202: Ribbing structure
- 300: Microscope column
- 302: Matching elements
- 400: Microscope system
- 402: Optical unit
- 404: Sample space
- 406: Arm
- 500: Microscope system
- 502: Optical Unit
- 504: Arm
- 600: Microscope column
- 700: Microscope system
- 702: Optical Unit
- 704: Arm
- D1, D2: Center
- D: Distance
- H: Height

## Claims

1. A microscope base (100) configured to mount microscope columns (300, 600), the microscope base (100) comprising
a first group (102) of mounting elements, positioned at a first end (108) of the microscope base 100, and
a second group (104) of mounting elements (106) positioned adjacent to the first group (102) of mounting elements (106) between the first group (102) of mounting elements (106) and a second end (110) of the microscope base (100) opposite of the first end (108) of the microscope base (100),
wherein the first group (102) of mounting elements (106) is configured to mount a first type of a microscope column (300, 600), and the second group (104) of mounting elements (106) is configured to mount a second type of a microscope column (300, 600),
wherein at least one of the first group (102) of mounting elements (106) and the second group (104) of mounting elements (106) each consist of at least one mounting element (106).

2. The microscope base (100) according to claim 1, comprising an opening (112) configured to receive a transmitted light illumination device (116).

3. The microscope base (100) according to claim 1 or 2, comprising a receiving portion (114) configured to receive a microscope stage.

4. The microscope base (100) according to any of the preceding claims, comprising a transmitted light illumination device (116).

5. The microscope base (100) according to claim 4, wherein the transmitted light illumination device (116) is configured to provide a diffuse illumination.

6. The microscope base (100) according to claim 4 or 5, comprising a controller (200) configured to control the transmitted light illumination device (116), wherein the controller (200) is preferably located at the first end (108) of the microscope base (100).

7. The microscope base (100) according to any of the preceding claims, wherein the microscope base (100) has a height (H) in the range of 10 mm to 40 mm, preferably 20 mm to 30 mm.

8. The microscope base (100) according to any of the preceding claims, wherein a main body of the microscope base (100) is manufactured by die casting, preferably aluminum die casting.

9. The microscope base (100) according to any of the preceding claims, comprising a set of carrying handles (118) positioned on a left side (122) and a right side (124) of the microscope base (100).

10. The microscope base (100) according to any of the preceding claims, wherein a distance (D) between a center (D1) of the first group (102) of mounting elements (106) and a center (D2) of the second group (104) of mounting elements (106) is at least 70 mm and at most 100 mm, preferably at least 80 mm and at most 90 mm.

11. The microscope base (100) according to any of the preceding claims, wherein at least one of the first group (102) of mounting elements (106) and the second group (104) of mounting elements (106) comprises through holes and/or blind holes, preferably threaded holes.

12. The microscope base (100) according to any of the preceding claims, wherein the mounting elements (106) of at least one of the first group (102) of mounting elements (106) and the second group (104) of mounting elements (106) are arranged in any one of the following configurations: triangular, rectangular, trapezoidal, pentagonal, hexagonal, heptagonal, octagonal, circular and in an X-shaped manner.

13. The microscope base (100) according to any of the preceding claims, wherein the first group (102) of mounting elements (106) and the second group (104) of mounting elements (106) each consist of at least three mounting elements (106).

14. A microscope system (400, 500, 700) comprising the microscope base (100) according to any of the preceding claims, at least one microscope column (300, 600), configured to be mounted to at least one of the first group (102) of mounting elements (106) and the second group (104) of mounting elements (106), and at least one optical unit (402, 502, 702), configured to be mounted to the microscope column (300, 600).

15. The microscope system (400, 500, 700) comprising the microscope base (100) according to claim 14, wherein the at least one microscope column (300, 600) comprises matching elements (302) that are fixed to the microscope column (300, 600) or are integrated parts of the microscope column (300, 600), wherein the matching elements (302) of the microscope column (300, 600) are configured to engage with the respective mounting elements (106) of the microscope base (100).
